# EUROPÄISCHE PATENTSCHRIFT

(11) **EP 0 337 285 B1**
(45) Veröffentlichungstag und Bekanntmachung des Hinweises auf die Patenterteilung: **06.04.1994**
(21) Anmeldenummer: 89106014.7
(22) Anmeldetag: 06.04.1989
(51) Int. Cl.: C04B 38/06, B01D 39/20

(54) **Verfahren zur Herstellung eines fluid-durchlässigen keramischen Materials**
Process for the production of fluid permeable ceramic material
Procédé pour la préparation d'un Matériau céramique perméable aux fluides

(30) Priorität: 12.04.1988 DE 3812156
(43) Veröffentlichungstag der Anmeldung: 18.10.1989
(73) Patentinhaber: Wacker-Chemitronic Gesellschaft für Elektronik-Grundstoffe mbH, D-84489 Burghausen (DE)
(72) Erfinder: Braetsch, Volker, Dr. Dipl.-Phys., D-8265 Neuötting (DE); Nitzl, Gerald, Dipl.-Ing. (FH), D-8264 Waldkraiburg (DE); Dietl, Josef, Dr. Dipl.-Phys., D-8265 Neuötting (DE); Liethschmidt, Klaus, Dr. Dipl.-Chem., D-5020 Frechen (DE)

(56) Entgegenhaltungen:
- WO-A-88/00933
- FR-A- 2 201 711
- GB-A- 1 004 352
- GB-A- 2 105 316
- CHEMICAL ABSTRACTS, Band 109, 1988, Seite 237, Zusammenfassung Nr. 26695z, Columbus, Ohio, US; & JP-A-63 74 962 (KUROSAKI REFRACTORIES CO. LTD) 05-04-1988
- CHEMICAL ABSTRACTS, Band 103, 1985, Seite 233, Zusammenfassung Nr. 26199s, Columbus, Ohio, US; & JP-A-60 33 272 (TOYO RUBBER INDUSTRY CO. LTD) 20-02-1985

## Beschreibung

Die Erfindung betrifft ein Verfahren zur Herstellung eines das Durchtreten von Fluiden gestattenden keramischen Materials durch Abformung einer Polyurethanschaumstruktur mit einem in Gegenwart von Kohlenstoff reaktionsgebundenem Siliciumpulver.

Aus der DE-A-34 40 346 ist ein Verfahren zur Herstellung von einem Material auf Basis von in Gegenwart von Kohlenstoff reaktionsgebundenem Siliciumpulver bekannt, bei dem Siliciumpartikel mit einem organischen Bindemittel gemischt werden, aus der Mischung ein Formkörper gebildet wird und dieser schließlich einer Temperaturbehandlung unterworfen wird, in deren Verlauf die organische Substanz carbonisiert und das verbliebene geringe Mengen Kohlenstoff enthaltende Siliciumgerüst durch Reaktionsbindung verfestigt wird. Dabei ist auch die Herstellung einer porösen Struktur möglich, wenn das Siliciumpulver in einer Korngrößenverteilung vorgelegt wird, die eine entsprechend lockere und durchlässige Schüttung gestattet. Letztlich ist die Porosität des erhaltenen Materials jedoch immer an die Größe der eingesetzten Siliciumteilchen gebunden, so daß offenporige Strukturen im Porenweitenbereich von 0.1 bis 10 mm den Einsatz von verhältnismäßig großen Siliciumteilchen erfordern, wodurch einerseits die mechanische Stabilität des Produktes herabgesetzt und andererseits nur ein ungünstiges Verhältnis zwischen Poren- und Gesamtvolumen erzielt wird. Dieses Material bietet seine Vorteile also hauptsächlich im feinporigen Bereich.

Aus der DE-A-23 49 472, angemeldet mit Priorität der US-Anmeldung mit Aktenzeichen 294 048, Anmelder Ford-Werke, ist die Herstellung eines von Kanälen durchzogenen Katalysatorträgers aus Siliciumnitrid bekannt. Dabei wird aus Siliciumpulver, Lösungs- und Plastifizierungsmittel sowie einem Binder eine Aufschlämmung erzeugt und auf einen flachen Träger aus Papier oder Textilgewebe aufgebracht. Der überzogene Träger wird danach in einer Wellvorrichtung vorgeformt und dann so zu einer zylindrischen Struktur aufgewickelt, daß die Wellungen Gasdurchgänge durch die Struktur bilden. Anschließend wird durch Erhitzen in Luft das organische Material entfernt und schließlich in einem Nitridierofen das Silicium in Siliciumnitrid überführt. Dabei wird ein aus einer Vielzahl von linearen Kanälen aufgebautes Produkt erhalten, bei dem die Kanalwände Poren aufweisen, deren durchschnittlicher Durchmesser maximal etwa 3.5 µm beträgt. Die Bildung der Poren erfolgt während des abschließenden Brennvorganges und kann daher nur wenig beeinflußt werden. Auch die Herstellung und Formung des Ausgangsmaterials ist aufwendig und umständlich. Außerdem hat die lineare, langgestreckte Kanalstruktur ein ungünstiges Durchströmungsverhalten zur Folge.

In der Patentanmeldung GB-2105316A ist ein Verfahren zur Herstellung von porösem Siliciumnitrid offenbart. Demnach wird aus Siliciumpulver, einer Flüssigkeit und einem Füllmaterial ein poröser Siliciumkörper gebrannt und in einer Stickstoffatmosphäre nitridiert.

Aus der Patentschrfit GB-1,004,352 ist ein Verfahren zur Herstellung eines Schaumes aus einem metallischen oder keramischen Pulver bekannt. Der Schaum wird erhalten, indem eine organische Struktur mit einer Suspension des Pulvers getränkt und gebrannt wird, wobei die organische Struktur weitgehend zu Kohlenstoff zersetzt und das Pulver gesintert wird.

Die beiden letztgenannten Verfahren haben den Nachteil, daß entweder nur kohlenstoffarme Materialien hergestellt werden können oder solche, deren Kohlenstoffgehalt durch die Rezeptur der Ausgangsstoffe festgelegt ist.

Aufgabe der Erfindung war es daher, ein Verfahren der eingangs genannten Art anzugeben, welches die genannten Nachteile nicht hat und dessen Verfahrensprodukt vielseitig verwendbar ist.

Gelöst wird die Aufgabe durch ein Verfahren der genannten Art, welches dadurch gekennzeichnet ist, daß
ein Schaum auf Polyurethanbasis mit einer offenzelligen Porenstruktur und einer Porengröße von 0,1 bis 10 mm als Substrat vorgelegt wird, die Porenstruktur mit einer Silicium, Kunstharz und flüchtiges organisches Lösungsmittel enthaltenden Mischung mit einer Viskosität von maximal 10 Pa·s beschichtet wird,
das Lösungsmittel entfernt und das Kunstharz zumindest teilweise zum Aushärten gebracht wird,
eine Temperaturbehandlung vorgenommen wird, in deren Verlauf die Temperatur bis auf einen Wert von 1300 bis 1550°C gesteigert wird, wobei im Temperaturbereich von 200 bis 600°C das Substrat ausgetrieben wird und in Abhängigkeit der Temperatursteigerungsrate und durch die Wahl zwischen oxidierenden und inerten Bedingungen derartig Einfluß auf den Kohlenstoffanteil im keramischen Material genommen wird, daß er bezogen auf Silicium 0,1 bis 10 Gew.-% beträgt, und ab 1200 °C das verbleibende Siliciumgerüst reaktionsgebunden wird.

Als Substrat für die Abformung einsetzbare Schäume auf Polyurethanbasis, die eine geeignete offenzellige Porenstruktur besitzen, sind bekannt und im Handel erhältlich; sie werden beispielsweise von der Firma Recticell (Iserlohn, BRD) hergestellt und vertrieben. Die Porosität (offene Poren) solcher Schäume kann bis zu 90% betragen. Bevorzugt werden Schäume mit einer durchschnittlichen Porenweite von 0.1 bis 10 mm eingesetzt, wobei jedoch der Einsatz von Schäumen mit demgegenüber größeren Poren, die derzeit noch wenig gebräuchlich sind, nicht ausgeschlossen ist. Bei Schäumen mit einer durchschnittlichen Porenweite unterhalb 0.1 mm ist in der Regel eine gleichmäßige Beschichtung der Porenstruktur nicht oder nur schwer zu erzielen. Grundsätzlich lassen sich sowohl harte als auch weichelastische Schäume einsetzen, wobei die Auswahl in den meisten Fällen je nach besserer Eignung durch die jeweils gewählte Beschichtungsmethode, wie beispielsweise Tauchen, Saugen oder Gießen, oder durch die Methode bestimmt wird, mittels derer anschließend überschüssiges Beschichtungsmaterial entfernt wird.

Zur Beschichtung der Porenstruktur dient eine aus Siliciumpulver, Kunstharz und einem flüchtigen Lösungsmittel oder Lösungsmittelgemisch zubereitete Aufschlämmung, deren Viskosität maximal etwa 10 Pa·s beträgt. Mit höheren Viskositäten lassen sich erfahrungsgemäß Beschichtungen in der erforderlichen Gleichmäßigkeit und mit vertretbarem Zeitaufwand nicht oder nur schwer aufbringen. Zweckmäßig werden Aufschlämmungen eingesetzt, deren Viskosität zwischen 0.1 und 10 Pa·s liegt, wobei grundsätzlich jedoch geringerviskose Mischungen nicht ausgeschlossen sind.

Bei der Herstellung der Aufschlämmung wird günstig Siliciumpulver verwendet, dessen maximale Korngröße im Bereich von 1 bis 50 µm liegt. Material in diesem Korngrößenbereich kann z.B. mittels Turbosichter und anschließende Korngrößenanalyse klassiert und bereitgestellt werden. Der Gewichtsanteil in der Aufschlämmung, bezogen auf die Summe von Siliciumpulver und Siliconharz, beträgt vorteilhaft 40 bis 80 Gew%. Die erforderliche Reinheit des Siliciums richtet sich nach dem vorgesehenen Verwendungszweck des Produktes; so wird man für den Einsatz bei der Filtration von Schmelzen von Solarsilicium auf ein erheblich reineres Ausgangsmaterial zurückgreifen als beispielsweise bei der Filtration von Aluminiumschmelzen mit hohem Fremdstoffgehalt, bei denen die Reinheit eine weniger wichtige Rolle spielt. Im Grunde eignet sich Silicium jeder Reinheitsstufe von reinstem Silicium für die Herstellung elektronischer Bauelemente über metallurgisches Silicium bis zu legiertem Silicium mit einem Siliciumanteil von etwa 65 Gew%.

Für die Aufschlämmung geeignete Kunstharze sind solche, die bei Entfernung des Lösungsmittels zu einem zumindest teilweisen Aushärten befähigt sind, so daß sie einerseits die Bindung der Siliciumteilchen aneinander und zugleich auch an das Substrat und dessen Porenstruktur gewährleisten. Diese Voraussetzung wird von vielen bekannten und im Handel erhältlichen Siliconharzen erfüllt, wie etwa dem unter dem Namen Methylsiliconharz MK vertriebenen Produkt der Firma Wacker-Chemie GmbH. Es können auch Siliconharze eingesetzt werden, die beim Aushärten zumindest teilweise vernetzen. Zu diesem Zweck haben sich Siliconharze als besonders geeignet erwiesen, bei denen das Verhältnis der Si-C-Bindungen zu den Si-O- bzw. Si-N-Bindungen zwischen 1 und 1.5 liegt, wie beispielsweise im Falle des unter dem Namen Polysilazanharz B571 vertriebenen Produkt des oben genannten Unternehmens. Dabei ist zu berücksichtigen, daß im Endprodukt in der Regel ein bestimmter Anteil des auf diese Weise eingebrachten Sauerstoffs und/oder Stickstoffs verbleibt. Um bei der nachfolgenden Temperaturbehandlung sicherzustellen, daß der zurückbleibende Kohlenstoffanteil gering bleibt, werden vorteilhaft im wesentlichen Methyl- oder Ethylgruppen als organische Reste enthaltende Siliconharze eingesetzt.

Als Lösungsmittel oder Lösungsmittelgemische werden die bekannten Siliconharze lösenden organischen Flüssigkeiten verwendet, also bevorzugt Aromaten wie Benzol, Toluol oder insbesondere Xylol. Auch der Einsatz von flüssigen aliphatischen Kohlenwasserstoffen wie etwa Petrolether, Ligroin, Cyclohexan oder Alkoholen wie Methanol, Ethanol oder Propanol oder anderen organischen Lösungsmitteln wie Aceton ist möglich, sofern sie das ausgewählte Siliconharz zu lösen vermögen und sich im folgenden Behandlungsschritt leicht wieder entfernen lassen. Vorzugsweise werden Lösungsmittel oder -gemische verwendet, deren Siedepunkt im Bereich von 50 bis 130°C liegt.

Gleichfalls geeignet sind Phenol-Resolharze, die vielfach den Vorteil haben, daß sie wasserlöslich sind und somit auch den Einsatz von Wasser als Lösungsmittel ermöglichen. In diesem Fall kann bei dem Teilschritt der Entfernung des Lösungsmittels auf aufwendige Auffangvorrichtungen verzichtet werden.

Die Aufschlämmung wird zweckmäßig in der Weise hergestellt, daß die Lösung des jeweils ausgewählten Kunstharzes, beispielsweise Siliconharzes in dem geeigneten Lösungsmittel vorgelegt wird und unter Rühren die vorgesehene Menge Siliciumpulver nach und nach eingetragen wird. Gegebenenfalls kann dabei auch durch Zugabe von weiterem Lösungsmittel oder Harzlösung die Viskosität noch gesteuert werden. Bei starker Staubentwicklung kann es jedoch auch zweckmäßig sein, das vorgelegte Siliciumpulver mit der flüssigen Phase zu überschichten und dann zu vermischen. Die Viskosität der Aufschlämmung kann z.B. mittels Kugelfall- oder Rotationsviskosimeter überprüft werden.

Für die Beschichtung des Schaumes, d.h. letztendlich der seine innere Oberfläche bildenden offenzelligen Porenstruktur, kommen verschiedene Methoden in Frage. Beispielsweise kann man, insbesondere bei großporigen Strukturen oder bei harten Schäumen, den Schaum in die Aufschlämmung eintauchen, gut durchtränken und ihn anschließend entnehmen und das überschüssige Material abtropfen lassen, so daß die die Poren umschließende Oberfläche des Schaumes möglichst vollständig mit der Aufschlämmung bedeckt wird. Vor allem bei weichelastischen Schäumen hat es sich bewährt, diese zunächst ggf. unter Ausnutzung ihrer Saugwirkung mit der Aufschlämmung zu tränken und danach zur Entfernung des überschüssigen Materials auszudrücken, beispielsweise mittels beidseitig einwirkender Walzen oder durch Abschleudern. Eine andere Möglichkeit besteht darin, den vorgelegten Schaum von der Aufschlämmung durchströmen zu lassen, bis die Poren in ausreichendem Maße belegt sind.

Die Vollständigkeit der Beschichtung kann dabei durch Vergleich des Ausgangs- und Endgewichtes des Schaumes abgeschätzt werden, so daß bei einer nicht ausreichenden Gewichtszunahme ggf. eine erneute Beschichtung vorgenommen werden kann. Im allgemeinen hat es sich als ausreichend erwiesen, wenn die Gewichtszunahme eine etwa 80%ige Beschichtung des Porengerüstes erwarten läßt. Erfahrungsgemäß liegen die bei einem Beschichtungsvorgang erzielten Schichtdicken in der Größenordnung der Größe der Siliciumpartikel und betragen etwa 2 bis 100 µm. Größere Schichtdicken lassen sich erhalten, indem ggf. mehrere Beschichtungsvorgänge hintereinander durchgeführt werden, wobei die jeweils vorher aufgebrachte Schicht zumindest antrocknen gelassen wird. Bei solchen Beschichtungsfolgen können auch unterschiedliche Aufschlämmungen eingesetzt werden.

Im nächsten Verfahrensschritt wird der mit einer Beschichtung versehene Schaum getrocknet, um Lösungsmittelreste zu entfernen und gleichzeitig dabei das Harz zumindest teilweise aushärten zu lassen, so daß die Haftung der Siliciumteilchen am Porengerüst verbessert und ihre Einbettung in das Harz stabilisiert wird. Um eine unkontrollierte Freisetzung der ggf. verwendeten flüchtigen organischen Lösungsmittel an die Umgebungsluft zu verhindern, wird in solchen Fällen dieser Vorgang zweckmäßig in einem geschlossenen Trockensystem durchgeführt, beispielsweise in einer Vakuumkammer oder einem Trockenschrank, wo die entfernten Lösungsmittel aufgefangen werden können. Um die Entfernung des Lösungsmittels zu erleichtern, kann der Vorgang auch unter Wärmeeinwirkung durchgeführt werden, wobei in der Regel eine Temperatursteigerung bis in den Siedebereich des Lösungsmittels ausreichend ist, ggf. jedoch bis in den Erweichungsbereich des Harzes ausgedehnt werden kann, wodurch sich bei Bedarf eine Vergleichmäßigung und Stabilisierung der Beschichtung erreichen läßt.

Das solchermaßen erhaltene lösungsmittelfreie Material wird nun einer Temperaturbehandlung unterzogen, in deren Verlauf die organischen Komponenten, d.h. das Polyurethanschaumgerüst und das ausgehärtete Harz, zersetzt und zum größten Teil ausgetrieben werden. Die verbliebenen Rückstände, also im wesentlichen Kohlenstoff mit Anteilen von Sauerstoff und/oder Stickstoff, tragen zur Reaktionsbindung des Siliciumgerüstes bei, welches somit letztlich einer Abformung der vorgegebenen Substratstruktur entspricht. Die Temperaturbehandlung erfolgt in Form einer Temperatursteigerung, deren Steigerungsrate konstant gehalten oder auch variiert werden kann. Vorteilhaft werden dabei Steigerungsraten von 0.5 bis 20°C pro Min. eingehalten. Wichtig ist dabei zunächst der Bereich von 200 bis 600°C, in dem die Zersetzung und Austreibung der organischen Komponenten vor sich geht. Wird in diesem Bereich unter oxidierenden Bedingungen gearbeitet, verflüchtigt sich der vorhandene Kohlenstoff in Form seiner Oxide, und es verbleibt nur ein geringer Anteil von typisch 0.1 bis 1 Gew% in der festen Phase. Bei inerten Bedingungen werden die organischen Komponenten carbonisiert, und der Kohlenstoffanteil in der festen Phase kann, bezogen auf Silicium, bis zu 10 Gew% betragen. Grundsätzlich sind beide Arbeitsweisen möglich. In jedem Fall sollte die Temperatursteigerungsrate in dieser Phase so eingestellt werden, daß die dabei ablaufenden Zersetzungsreaktionen nicht zu einer Zerstörung des Siliciumgerüstes führen. Bisweilen kann es auch erforderlich sein, die Temperatur für eine gewisse Zeit in dem genannten Bereich konstant zu halten. Die letztendlich für diesen Teilschritt benötigte Zeit wird zweckmäßig an Hand von Vorversuchen ermittelt.

Daran anschließend wird die Temperatur weiter gesteigert, wobei der Endwert im Bereich von 1300 bis 1550°C liegt. Dabei beginnt ab etwa 1200°C eine deutliche Verfestigung des Siliciumgerüstes, die vermutlich auf eine unter Beteiligung der anwesenden Fremdelemente Kohlenstoff, Sauerstoff und/oder Stickstoff ablaufende Reaktionsbindung zurückzuführen ist. Ein stabiles Produkt wird erhalten, wenn zumindest ab 1200°C die Temperaturbehandlung in einer Stickstoffatmosphäre vorgenommen wird. Offensichtlich kann dabei bereits in diesem niedrigen Temperaturbereich die Verfestigung durch zusätzliche Reaktion mit der Gasphase unter Bildung von nitridischen Phasen unterstützt werden. Ein Produkt, bei welchem die Temperaturbehandlung über den Schmelzpunkt des Siliciums, also ca. 1420°C hinaus geführt wurde, zeichnet sich durch besondere Stabilität aus, welche vermutlich auf das Zusammenwirken der im Verlauf des Prozesses entstandenen, wohl carbidischen und/oder nitridischen und/oder oxynitridischen Phasen untereinander und mit dem verbliebenen Silicium zurückzuführen ist.

Die für die Reaktionsbindung erforderlichen Verweilzeiten werden zweckmäßig an Hand von Vorversuchen ermittelt. Sie werden in der Regel deutlich verlängert, wenn durch Reaktion mit einer Stickstoffatmosphäre eine weitgehende Nitridierung des Siliciumgerüstes erzielt werden soll.

Das in einer offenzelligen Porenstruktur vorliegende reaktionsgebundene Siliciumgerüst des nach diesem Verfahren erhältlichen Materials kann in einem weiteren Schritt an der Oberfläche mit Beschichtungen versehen werden, wobei sowohl das Aufbringen von zusätzlichen Schichten, als auch das Verändern der bereits vorhandenen Oberfläche in Frage kommt, beispielsweise durch Reaktion in geeigneter Atmosphäre und unter entsprechenden Temperaturbedingungen unter Bildung von Siliciumcarbid, -nitrid oder -oxynitrid. Eine zusätzliche Schicht läßt sich z.B. durch kurzzeitiges Eintauchen in geschmolzenes Silicium oder durch Gasphasenabscheidung einer Oberflächenschicht aus elementarem Silicium erzeugen. Eine weitere Möglichkeit besteht unter anderem darin, eine hydrolysierbare Organosiliciumverbindung wie etwa Tetraethoxysilan aufzutragen und diese durch Hydrolyse und Temperbehandlung in eine Siliciumdioxidbeschichtung umzuwandeln. Die Beschichtung kann allgemein sowohl in Form einer einzelnen Komponente, als auch in Form einer Mischung oder Mischphase mehrerer Komponenten vorliegen.

Das erhaltene Material läßt sich wegen seiner hohen thermischen und chemischen Stabilität und Thermoschockresistenz ausgezeichnet als Filtermedium für Flüssigkeiten, und zwar insbesondere für die Filtration von Metallschmelzen, vor allem von Aluminium, verwenden. Es kann mit Vorteil zur Filtration von Halbleitermaterialien, und bemerkenswerterweise auch für Silicium eingesetzt werden, beispielsweise um nach einem Schlackenextraktionsschritt verbliebene feste Schlackenpartikel aus der Schmelze abzutrennen.

Eine besonders vorteilhafte Wirkung zeigt das Material auch bei der Verwendung in Brennvorrichtungen als Grenzmedium zwischen der Flammenzone und nicht entzündetem brennfähigem Gemisch. Dabei zeichnet es sich nicht nur durch lange Standzeiten aus, sondern bewirkt auch eine besonders gute Durchmischung des zündfähigen Gemisches und wegen des turbulenzreichen Durchflusses auch einen besonders effektiven Brennvorgang im Hinblick auf die wärmetechnischen Wirkungsgrade.

Weiterhin läßt sich das Material auch ausgezeichnet als Trägermaterial für Katalysatoren verwenden. Beispielhaft sei hier die Beschichtung mit Titandioxid genannt. Das so erhaltene Material läßt sich dank seiner hohen thermischen Stabilität als Katalysator in Entstickungsanlagen einsetzen. Auch bei der Wärmebehandlung von Gegenständen, bei denen es auf eine gleichmäßige Erwärmung und einen gleichmäßigen Zutritt der Ofenatmosphäre ankommt, werden ausgezeichnete Ergebnisse erzielt, wenn die zu behandelnden Gegenstände mit dem erfindungsgemäßen Material umgeben werden, beispielsweise in der Art eines Schachtes oder einer Kammer. Die offenzellige Porenstruktur bewirkt hier einen sehr gleichmäßigen Wärmedurchgang auf die umgebenen Gegenstände.

Ggf. erforderliche Formgebungsschritte können sowohl an dem für die Abformung vorgesehenen Substrat, also dem Polyurethanschaum, vorgenommen werden als auch an dem fertigen keramischen Material oder an dem Zwischenprodukt.

Nachstehend wird die Erfindung an Hand von Beispielen näher erläutert:

### Beispiel 1:

Es wurden 250 ml einer Siliconharzlösung hergestellt, die als Lösungsmittel 50 Gew% Xylol, und als Harzkomponente 50 Gew% Methylsiliconharz (Typ MK, Hersteller Wacker-Chemie) enthielt. In diese Lösung wurden unter Rühren 264 g Siliciumpulver (Si-Anteil 99.99999 Gew%, mittlere Korngröße 7 µm) eingetragen und weitergerührt, bis eine homogene Mischung erreicht war. Die Viskosität dieser Aufschlämmung wurde mittels Rotationsviskosimeter bestimmt, sie betrug ca. 280 mPa s.

In die Aufschlämmung wurde nun eine etwa 20 mm dickes, quadratisches Stück mit ca. 50 mm Kantenlänge eines Polyurethanschaumes (Hersteller Fa. Recticell) mit offenzelliger Porenstruktur (Porenweite ca. 1 bis 1.5 mm) eingelegt, gut durchgetränkt, und anschließend mit Hilfe eines Walzenpaares (Spaltbreite ca. 5 mm) ausgepreßt. Das Produkt wurde dann in einen Trockenschrank gebracht und dort ca. 30 min bei ca. 90°C getrocknet. Die danach gemessene Gewichtszunahme betrug ca. 17 g, was einer etwa 75%igen Belegung des Schaumgerüstes entsprach. Daraufhin wurde der Beschichtungsvorgang in analoger Weise wiederholt, und der getränkte Schaum nach dem Auspressen erneut getrocknet, wobei für etwa 24 Std. eine Temperatur von ca. 250°C eingehalten wurde. Die danach festgestellte Gewichtszunahme betrug insgesamt ca. 29 g, das Produkt zeigte bei visueller Kontrolle eine vollständige Beschichtung des Porengerüstes.

Nach dieser Vorbehandlung wurde der so erhaltene Formkörper in einen auf Raumtemperatur befindlichen Ofen eingelegt, in dem dann eine Stickstoffatmosphäre eingestellt wurde. Mit einer konstanten Steigerungsrate von etwa 50°C/h wurde nun die Temperatur auf einen Wert von 1280°C hochgefahren und für etwa 10 Stunden dort gehalten. Dann wurde die Temperatur erneut gesteigert, und zwar wieder mit einer Rate von 50°C/h, bis eine Temperatur von 1450°C erreicht war. Nach einer Haltezeit von 5 Stunden wurde die Temperatur mit derselben Steigerungsrate noch einmal bis 1530°C erhöht, und nach einer Haltezeit von ca. 15 min der Ofen abgeschaltet. Das Produkt wurde im Ofen abkühlen gelassen und dann entnommen. Das Gewicht betrug ca 25.2 g, entsprechend einer Dichte von etwa 0.5 g/cm³, der Porendurchmesser lag zwischen 1 bis 1.5 mm.

Untersuchungen des Produktes mit Hilfe der Rasterelektronenmikroskopie und mittels Röntgendiffraktometer zeigten, daß sich auf der Oberfläche der Poren eine filzartige Siliciumdioxid/Siliciumoxynitridschicht gebildet hatte.

Das erhaltene keramische Material mit offenzelliger Porenstruktur wurde nun als eine Art Frittenboden in einem mit einem Trichter versehenen Graphitrohr befestigt. Diese Anordnung wurde dann in einer Vakuumanlage in Argonatmosphäre auf ca. 1500°C erhitzt und zum Umgießen einer bereitgehaltenen Schmelze von ca. 1.5 kg durch Extraktionsbehandlung mit Calciumsilicatschlacke gereinigtem Silicium (Ca-Gehalt ca. 5000 Atom-ppm) in einen Graphittiegel verwendet. Beim Gießvorgang wurde das Material von der gesamten Schmelze durchflossen und ließ danach keinerlei Angriff erkennen. Die erhaltene Schmelze war frei von silicatischen Partikeln; ihr Calciumgehalt nach der Filtration lag unter 500 Atom-ppm.

### Beispiel 2:

In genau der in Beispiel 1 beschriebenen Weise wurde eine weitere Probe hergestellt; als Substrat diente ein Polyurethanschaum mit offenzelliger Porenstruktur und einer Porenweite von 0.5-0.7 mm und den Außenmaßen 100x40x20 mm³, die restlichen Verfahrensparameter blieben unverändert.

Das erhaltene Produkt wurde in einer Halterung befestigt und dann in eine Versuchsbrennvorrichtung für die Verbrennung von Erdgas-Luft-Gemischen als Grenzmedium zwischen der Flammenzone und nicht entzündetem brennfähigem Gemisch eingebaut. Die Anlage wurde mit einem Grundgasdurchsatz von 10 l/h Erdgas und 100 l/h Luft gefahren; dieser konnte in einem Regelbereich von 1:18 variiert werden. Bei herkömmlichen Düsenbrennern liegt dieser Wert nur bei 1:10. Gleichfalls konnte dank der hohen Thermoschockresistenz des Materials der Brenner zwei Monate lang einem jeweils 4-fachen Ein- und Ausschaltzyklus pro Stunde unterworfen werden, ohne daß Materialprobleme auftraten.

Für die Mischung der Brenngase war keine vorgeschaltete Mischbatterie erforderlich, und der Brennvorgang zeichnete sich durch über die gesamte Fläche gleichmäßigen Verlauf aus. Die niedrigen Flammentemperaturen hatten darüber hinaus auch einen niedrigen NOₓ-Anteil in den Abgasen zur Folge.

### Beispiel 3:

Eine Menge von ca. 500 g Rohsilicium (Si-Anteil ca. 96 Gew%, mittlere Korngröße ca. 2 µm) wurde mit einer vorher zubereiteten Lösung von ca. 250 g Phenol-Resolharz in ca. 250 g vollentsalztem Wasser überschichtet und dann mittels eines Rührers vermischt, bis eine homogene Aufschlämmung entstanden war. Die Viskosität der Aufschlämmung betrug etwa 400 mPa·s.

In diese Mischung wurden nun mehrere Formteile aus Polyurethanschaum (Porenweite ca. 1-1.5 mm, Dicke ca. 20 mm) eingetaucht, getränkt und abtropfen gelassen. Die Formteile waren so zugeschnitten, daß sich aus ihnen ein kubischer Körper zusammensetzen ließ, der in seinem Inneren einen kubischen Hohlraum mit ca. 30 mm Kantenlänge aufwies.

Die abgetropften Formteile wurden visuell auf gleichmäßige Belegung der Poren untersucht und dann, ggf. nach erneutem Eintauchen und Abtropfen, während ca. 5 Stunden in einem auf etwa 100°C gehaltenen Trockenschrank getrocknet.

Danach wurden die Vorprodukte in einen auf Raumtemperatur befindlichen Ofen eingelegt, in welchem dann eine Argonatmosphäre eingestellt wurde. Mit einer Rate von etwa 30°C/h wurde die Temperatur dann konstant hochgefahren. Die Beobachtung des Brennvorganges zeigte, daß ab etwa 200°C die Zersetzung des organischen Materials (Carbonisierung) einsetzte und bei etwa 500°C abzuklingen begann. Die Temperatursteigerung wurde bis zu einem Wert von ca. 1400°C fortgesetzt; dort wurde der Ofen für etwa 24 Stunden gehalten und schließlich abgeschaltet. Die nach Abkühlung entnommenen Formteile erwiesen sich als mechanisch stabil und konnten ohne zusätzliche Bearbeitungsschritte wieder zu dem Würfel zusammengesetzt werden.

Im Innenraum des Würfels wurden nun an verschiedenen Stellen Thermoelemente angebracht, die bei Aufheizvorgängen die Temperaturverteilung vermessen sollten. Danach wurde der Würfel in einen Ofen gestellt und dessen Temperatur allmählich bis auf etwa 1000°C gesteigert. Sowohl während der Temperatursteigerung als auch während der anschließenden Haltephase und danach durchlaufenen Abkühlphasen wurde im Innenraum des Würfels eine gegenüber der normalen Ofenatmosphäre deutlich gleichmäßigere Temperaturverteilung festgestellt. Auf von dem erfindungsgemäßen Material umgebene Gegenstände ist also die Temperatureinwirkung erheblich gleichmäßiger, als wenn diese nur der Ofenatmosphäre ausgesetzt sind. Es eignet sich also ausgezeichnet zum Einsatz bei der Wärmebehandlung von Gegenständen, die eine sehr gleichmäßige Temperatureinwirkung verlangen, wie etwa Varistoren auf Basis von Zinkoxid.

## Patentansprüche

1. Verfahren zur Herstellung eines das Durchtreten von Fluiden gestattenden keramischen Materials durch Abformung einer Polyurethanschaumstruktur mit einem in Gegenwart von Kohlenstoff reaktionsgebundenem Siliciumpulver, dadurch gekennzeichnet, daß
ein Schaum auf Polyurethanbasis mit einer offenzelligen Porenstruktur und einer Porengröße von 0,1 bis 10 mm als Substrat vorgelegt wird, die Porenstruktur mit einer Silicium, Kunstharz und flüchtiges organisches Lösungsmittel enthaltenden Mischung mit einer Viskosität von maximal 10 Pa·s beschichtet wird,
das Lösungsmittel entfernt und das Kunstharz zumindest teilweise zum Aushärten gebracht wird,
eine Temperaturbehandlung vorgenommen wird, in deren Verlauf die Temperatur bis auf einen Wert von 1300 bis 1550°C gesteigert wird, wobei im Temperaturbereich von 200 bis 600°C das Substrat ausgetrieben wird und in Abhängigkeit der Temperatursteigerungsrate und durch die Wahl zwischen oxidierenden und inerten Bedingungen derartig Einfluß auf den Kohlenstoffanteil im keramischen Material genommen wird, daß er bezogen auf Silicium 0,1 bis 10 Gew.-% beträgt, und ab 1200 °C das verbleibende Siliciumgerüst reaktionsgebunden wird.

2. Verfahren nach den Ansprüchen 1, dadurch gekennzeichnet, daß
Siliciumpulver mit einer Teilchengröße von 1 bis 50 µm eingesetzt wird.

3. Verfahren nach einem oder mehreren der Ansprüche 1 bis 2, dadurch gekennzeichnet, daß
der Anteil des Siliciumpulvers in der Aufschlämmung, bezogen auf die Summe aus Siliciumpulver und Kunstharz, 40 bis 80 Gew% beträgt.

4. Verfahren nach einem oder mehreren der Ansprüche 1 bis 3, dadurch gekennzeichnet, daß
zumindest die Temperatursteigerung ab 1200 °C in einer Stickstoffatmosphäre vorgenommen wird.

5. Verfahren nach einem oder mehreren der Ansprüche 1 bis 4, dadurch gekennzeichnet, daß
ein erforderlicher Formgebungsschritt an dem Zwischenprodukt der Temperaturbehandlung vorgenommen wird.

6. Verfahren nach einem oder mehreren der Ansprüche 1 bis 5, dadurch gekennzeichnet, daß
das keramische Material mit einer Beschichtung aus einer oder mehreren der Komponenten Silicium, Siliciumcarbid, Siliciumdioxid, Siliciumnitrid oder Siliciumoxinitrid versehen wird.

7. Verwendung des nach einem Verfahren gemäß einem oder mehreren der Ansprüche 1 bis 6 hergestellten keramischen Materials zur Filtration von Flüssigkeiten, vorzugsweise Schmelzen von Metallen oder Halbleitermaterial.

8. Verwendung des nach einem Verfahren gemäß einem oder mehreren der Ansprüche 1 bis 6 hergestellten keramischen Materials als Trägermaterial für katalytisch wirksame Beschichtungen oder für Gegenstände, die einer Wärmebehandlung unterworfen werden.

9. Verwendung des nach einem Verfahren gemäß einem oder mehreren der Ansprüche 1 bis 6 hergestellten keramischen Materials in Brennvorrichtungen als Grenzmedium zwischen der Flammenzone und nicht entzündetem brennfähigem Gemisch.

## Claims

1. Process for the preparation of a ceramic material permitting the passage of fluids, by using a polyurethane foam structure as a mould for a silicon powder bonded by reaction in the presence of carbon, characterized in that a polyurethane-based foam having an open-cell pore structure and a pore size of 0.1 to 10 mm is taken as the substrate, the pore structure is coated with a mixture containing silicon, synthetic resin and volatile organic solvent and having a viscosity of not more than 10 Pa.s, the solvent is removed and the synthetic resin is at least partially hardened, a heat treatment is carried out, during which the temperature is increased to a value of 1300 to 1550°C, the substrate being expelled in the temperature range from 200 to 600°C and the carbon content of the ceramic material being influenced as a function of the rate of temperature increase and by the choice between oxidizing and inert conditions, in such a way that said carbon content is 0.1 to 10% by weight, based on silicon, and the remaining silicon skeleton being bonded by reaction from 1200°C.

2. Process according to Claim 1, characterized in that silicon powder having a particle size of 1 to 50 µm is used.

3. Process according to one or more of Claims 1 to 2, characterized in that the amount of silicon powder in the suspension is 40 to 80% by weight, based on the sum of silicon powder and synthetic resin.

4. Process according to one or more of Claims 1 to 3, characterized in that at least the temperature increase from 1200°C is carried out in a nitrogen atmosphere.

5. Process according to one or more of Claims 1 to 4, characterized in that any required shaping step is carried out on the intermediate product of the heat treatment.

6. Process according to one or more of Claims 1 to 5, characterized in that the ceramic material is provided with a coating of one or more of the components silicon, silicon carbide, silicon dioxide, silicon nitride or silicon oxynitride.

7. Use of the ceramic material prepared by a process according to one or more of Claims 1 to 6 for the filtration of liquids, preferably melts of metals or semiconductor material.

8. Use of the ceramic material prepared by a process according to one or more of Claims 1 to 6 as a carrier for catalytically active coatings or for articles which are subjected to a heat treatment.

9. Use of the ceramic material prepared by a process according to one or more of Claims 1 to 6 as a boundary medium between the flame zone and unignited combustible mixture in combustion apparatuses.

## Revendications

1. Procédé pour fabriquer un matériau céramique, perméable aux fluides, par moulage d'une structure de mousse de polyuréthane avec une poudre de silicium liée par réaction en présence de carbone, caractérisé en ce
qu'on prépare en tant que substrat une mousse à base de polyuréthane possédant une structure poreuse à cellules ouvertes et une taille de pores comprise entre 0,1 et 10 mm, on recouvre la structure poreuse avec un mélange contenant du silicium, une résine synthétique et un solvant organique volatil et possédant une viscosité égale au maximum à 10 Pa.s,
on élimine le solvant et on fait durcir au moins partiellement la résine synthétique,
on applique un traitement thermique, au cours duquel on augmente la température jusqu'à une valeur de 1300 à 1550°C, le substrat étant extrait dans la gamme de températures de 200 à 600°C, et on influe sur le pourcentage de carbone d'un matériau céramique, en fonction de la vitesse d'accroissement de la température et en effectuant un choix entre des conditions oxydantes et des conditions inertes, de telle sorte que le pourcentage de carbone est compris entre 0,1 et 10 % en poids, rapportés au silicium, et que la structure de silicium restante est liée par réaction à partir de 1200°C.

2. Procédé selon l'une des revendications 1,
caractérisé en ce qu'on utilise de la poudre de silicium possédant des particules d'une taille de 1 à 50 µm.

3. Procédé suivant une ou plusieurs des revendications 1 à 2, caractérisé en ce que le pourcentage de la poudre de silicium dans la suspension est compris entre 40 et 80 % en poids, rapportés à la somme de la poudre de silicium et de la résine synthétique.

4. Procédé selon une ou plusieurs des revendications 1 à 3, caractérisé en ce qu'on réalise au moins l'accroissement de température dans une atmosphère d'azote à partir de 1200°C.

5. Procédé selon une ou plusieurs des revendications 1 à 4, caractérisé en ce qu'on exécute une étape nécessaire de formage sur le produit intermédiaire du traitement thermique.

6. Procédé selon une ou plusieurs des revendications 1 à 5, caractérisé en ce qu'on applique au matériau céramique un revêtement formé d'un ou plusieurs des constituants suivants : silicium, carbure de silicium, bioxyde de silicium, nitrure de silicium ou oxynitrure de silicium.

7. Utilisation du matériau céramique fabriqué à l'aide du procédé selon une ou plusieurs des revendications 1 à 6, pour la filtration de liquides, de préférence des masses fondues de métaux ou d'un matériau semiconducteur.

8. Utilisation du matériau céramique fabriqué conformément au procédé selon l'une ou plusieurs des revendications 1 à 6, en tant que matériau de support pour des revêtements à action catalytique ou pour des objets, qui sont soumis à un traitement thermique.

9. Utilisation du matériau céramique fabriqué conformément au procédé selon l'une ou plusieurs des revendications 1 à 6, dans des dispositifs de combustion en tant que milieu limite entre la zone de la flamme et un mélange combustible non enflammé.
